# EUROPEAN PATENT SPECIFICATION

(11) **EP 1 788 354 B1**
(45) Date of publication and mention of the grant of the patent: **05.11.2008**
(21) Application number: 05025369.9
(22) Date of filing: 21.11.2005
(51) Int. Cl.: G01C 21/34

(54) **Electronic route display system and navigation system comprising the same**
Elektronisches Routenanzeigesystem und Navigationssystem, das dieses umfasst
Système d'affichage électronique d'itinéraires et système de navigation incorporant celui-ci

(43) Date of publication of application: 23.05.2007
(73) Proprietor: Alpine Electronics, Inc., Tokyo, 141 (JP)
(72) Inventor: Wittig, Dirk, Vor dem Lauch 14, 70567 Stuttgart (DE); Galos, Andreas, Vor dem Lauch 14, 70567 Stuttgart (DE)
(74) Representative: Klunker . Schmitt-Nilson . Hirsch

(56) References cited:
- US-B1- 6 396 498
- PATENT ABSTRACTS OF JAPAN vol. 1997, no. 03, 31 March 1997 (1997-03-31) -& JP 08 292060 A (ZANAVY INFORMATICS:KK), 5 November 1996 (1996-11-05)

## Description

### BACKGROUND OF THE INVENTION

### Field of the invention

The present invention is directed to an electronic route display system comprising a display screen adapted to display a map image and a display control unit generating image control signals for displaying the map image on the display screen. Moreover, the electronic route display system comprises a route display unit adapted to process route data which are indicative of a calculated route and to generate a route image. Further, the invention is directed to a navigation system comprising such electronic route display system, and more generally to a computer system comprising such electronic route display system. Further, the invention is directed to a method for displaying a route within a map image, according to which a map image including a route image is displayed on a display screen. The system and the method can be used in a vehicle navigation system or in a computerized route searching and calculating system.

### Description of the related art

A commonly known navigation system detects the position of a vehicle for performing vehicle route guidance or navigation, wherein the current position of the vehicle is generally detected by using a navigation sensor in the vehicle, a receiver such as a GPS (Global Positioning System) receiver, and map data corresponding to an area surrounding the detected position. For example, the map data is read from a recording medium such as a CD-ROM or a DVD. The navigation system displays a map image on a display screen and displays a mark indicating the current position of the vehicle. Here, the vehicle position mark is superimposed at a predetermined position of the map image.

Moreover, such navigation system usually has route guidance or navigation function, wherein the navigation system can search for a route that leads from a start point to a destination predetermined by the user of the navigation system. As the current position of the vehicle changes with the movement of the vehicle, the vehicle position mark is moved along the route on the display screen, or a map image adjacent to the vehicle is scrolled while the vehicle position mark persists at a predetermined point on the display screen.

Typically, in a map image of a navigation system as described above different map data such as different street types are displayed on the display screen depending on the displaying scale adjusted by the user of the navigation system. In order to differentiate different map information, different types of map data such as different street types have a different appearance for the user when viewing the map image, in particular have different drawing aspects like different colours, widths, style etc. which are indicative of the respective street type. According to an example, street types such as motorways or highways are usually drawn within the map image having a greater width than other street types like small regional streets. The general purpose of displaying a map image in a way as described above is that the user should be enabled to easily distinguish and compare the respective map data with reality.

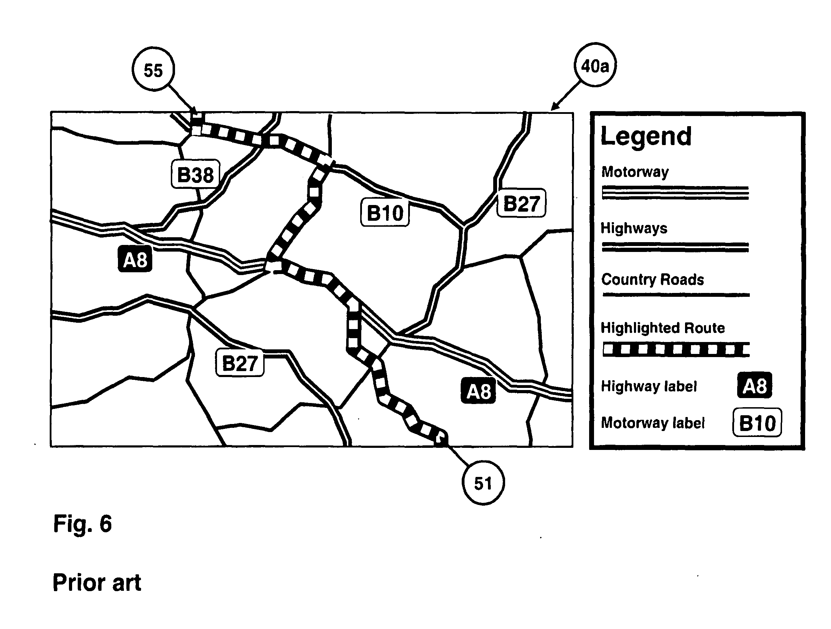

An example of such type of map image is shown in Fig. 6. The two-dimensional map image 40a visualizes different street types as displayed on a navigation system's display screen. The different street types such as motorways, highways and country roads have different drawing aspects like different colours, widths or line character etc., as shown in Fig. 6 according to an example. Additionally, the different street types may be displayed in different combinations of colour, width, style, etc. When viewing such map image, the user can easily distinguish and compare the different street types with reality. In the map image of Fig. 6, different colours are replaced by aspects like dash-type lines as explained in the accompanying legend.

When the user of the navigation system utilizes route guidance function of the navigation system, the calculated route that leads from a start point to a destination predetermined by the user is somehow highlighted within the map image, so that the calculated route may easily be recognized by the user. In Fig. 6, the highlighting is established by redrawing the streets belonging to the calculated route 51 resulting in a highlighted route 55 corresponding to the calculated route 51. Such highlighting is usually done by utilizing a special colour, style and/or a special width resulting in a special highlighting character. Disadvantageously, the original basic character and appearance of the street types corresponding to the calculated route is overlaid by the highlighted visualization of the calculated route, so that the user may not recognize and distinguish between the different street types belonging to the highlighted route.

In US 6 871 143 B2 there is disclosed a navigation apparatus comprising a navigation route obstructed-by-building detection unit which detects that a navigation route is obstructed by buildings, wherein a modified navigation route drawing unit is adapted to display the navigation route by lifting it on or above the buildings. With such an arrangement, the user of the navigation apparatus can easily observe the navigation route even if the buildings are substantially opaque and three-dimensionally displayed on a map. A disadvantage of the prior art described therein is that the user may have difficulties in realizing which streets belong to the highlighted route if the highlighted route is lifted on or above the buildings, is thus moved away from the streets of the original calculated route, as proposed in the prior art. Thus, the user may have difficulties in correlating the lifted, highlighted route image to the respective streets of the calculated route.

In US 6,396,498 B1 there is provided an information processing apparatus in which, when a route to a destination is searched, a road of the route is displayed with emphasis while a colour or a shape indicating the type of the road can be checked. When the route to the destination is searched, both sides of the road of the searched route are displayed with emphasis lines. The inside of both the sides of the road is displayed such that the type of the road, such as an express way or an open road, can be recognized.

In JP 08 292060 A there is disclosed an on-vehicle route searching device which enables to easily and accurately grasp the road type of a recommended route when displayed on a display system.

### SUMMARY OF THE INVENTION

It is therefore an object of the present invention to improve route guidance or route navigation in a way that the user, e.g. the driver of a vehicle, is enabled to recognize important route guidance information and associated map data from the display screen in an easy way.

In order to solve this problem, the invention provides an electronic route display system according to claim 1. Moreover, the invention is directed to a navigation system comprising such electronic route display system according to claim 12. Such navigation system may be implemented within a vehicle. Further, the invention is directed to a computer system comprising such electronic route display system according to claim 14. Further, there is provided a method for displaying a route within a map image, the method comprising the steps as specified in claim 15. Embodiments and advantageous features thereof are indicated in the dependent claims.

In particular, the invention provides an electronic route display system comprising a display screen adapted to display a map image and a display control unit for generating image control signals for displaying the map image on the display screen. The electronic route display system further comprises a route display unit which is adapted to process route data which are indicative of a calculated route, and which is adapted to generate route images. The route display unit includes first route displaying means for generating a first highlighted route image within the map image indicative of the calculated route, and includes second route displaying means for generating a second route image within the map image corresponding to the calculated route. The first route displaying means is adapted to offset at least a portion of the first highlighted route image from the calculated route on the map image, and the second route displaying means is adapted to generate at least a portion of the second route image with an appearance which is different from an original appearance of corresponding map data belonging to the calculated route on the map image.

According to the invention, such electronic route display system facilitates association of the highlighted route image with corresponding map data, for example streets, which belong to the calculated route. Thus, the user can easily assign the streets on the displayed map image to the highlighted route image and additionally can easily recognize the type of the streets which belong to the calculated route. With offsetting the at least one portion of the first highlighted route image from the calculated route on the map image the streets belonging to the calculated route and their original basic character and/or style can be recognized by the user. On the other hand, generating the at least one portion of the second route image with an appearance which is different from the original appearance of corresponding map data belonging to the calculated route on the map image makes it possible for the user to easily assign the streets on the map image to the offset highlighted route image.

The electronic route display system according to the invention may be part of a navigation system, e.g. a vehicle navigation system, or may be part of a computer system, such as a PC (Personal Computer), a mobile computer such as a notebook, a PDA (Personal Digital Assistant), a mobile telephone, or the like. In the following description and in the claims, the term "computer" or "computer system" is used without further explanation as to the above mentioned examples, the computer or computer system described is to comprise all above mentioned types of computers and mobile phones and the like. The electronic route display system according to the invention may be adapted to display route guidance information and/or to display road book or manoeuvre lists. The present invention can be used for displaying navigation guidance on a display screen of a computer of one of the above mentioned types.

According to an embodiment of the invention, the second route displaying means is adapted to generate the at least one portion of the second route image in a brightness which is different from, in particular darker than, the original brightness of corresponding map data belonging to the calculated route on the map image. For example, the at least one portion of the second route image is visualized like a drop shadow, which appears darker than the original brightness of the corresponding map data belonging to the calculated route on the map image. If the first highlighted route image, which is offset from the calculated route, looks like a lifted highlighted route image, the effect of the drop shadow as mentioned above imitates the natural effect of a drop shadow caused by a moved object. Advantageously, such drop shadow effect of the lifted highlighted route image rests on the streets belonging to the calculated route. On the other hand, such drop shadow effect keeps the original character of the street types as regards colour, width, style, etc., wherein the drop shadow makes the character of the streets only a little darker. As such, the user can easily assign the streets on the map to the lifted highlighted route image.

According to another embodiment of the invention, the second route displaying means is adapted to generate the at least one portion of the second route image in a colour and/or saturation which is different from the original colour and/or saturation, respectively, of corresponding map data belonging to the calculated route on the map image. This may have a similar effect as the drop shadow mentioned herein above.

In a further embodiment of the invention, the second route displaying means is adapted to generate the at least one portion of the second route image thereby keeping the original basic character and/or style of the corresponding map data on the calculated route. This provides the advantage that the user can recognize the type of map data such as street type belonging to the calculated route.

According to another embodiment of the invention, the first route displaying means is adapted to offset the at least one portion of the first highlighted route image thereby appearing as a lifting movement of the first highlighted route image with respect to the calculated route. As mentioned herein before, this may increase the legibility and attractiveness of the map image as a matter of imitating the natural effect of lifting an object which causes a drop shadow.

In a further embodiment of the invention, the display control unit is adapted for displaying a two-dimensional map image on the display screen, and the route display unit is adapted to generate two-dimensional route images. According to another embodiment of the invention, the display control unit is adapted for displaying a three-dimensional map image on the display screen, and the route display unit is adapted to generate three-dimensional route images.

According to another embodiment of the invention, the first route displaying means is adapted to offset the at least one portion of the first highlighted route image in a first direction of the display screen, for example the horizontal x-direction of the display screen. Additionally, the first route displaying means may further be adapted to offset the at least one portion of the first highlighted route image in a second direction of the display screen perpendicular to the first direction, for example the vertical direction along the y-axis of the display screen. Such an offset appears to the user like a lifting movement of the highlighted route image in a third direction perpendicular to the first and second directions, for example along the z-axis of the display screen.

According to another embodiment of the invention a first adjustment unit may be included in the electronic route display system which is connectible to the route display unit, wherein the first adjustment unit is operable by the user for adjusting the offset of the first route displaying means. Thus, the user of the system may adjust the offset of the highlighted route image from the calculated route, in particular the lifting movement of the highlighted route image, by free selection.

According to another embodiment of the invention, the electronic route display system may include a second adjustment unit which is connectible to the route display unit, wherein the second adjustment unit is adapted to adjust the offset of the first route displaying means automatically when at least a part of the first highlighted route image superimposes a corresponding part of the calculated route on the map image.

Further advantageous features and embodiments of the invention are evident from the dependent claims.

### BRIEF DESCRIPTION OF THE DRAWINGS

The invention will now be explained in more detail by means of embodiments and accompanying drawings, in which:
- Fig. 1: shows a schematic diagram illustrating an embodiment of a vehicle navigation system;
- Fig. 2: shows a schematic diagram illustrating a map information memory, a vehicle position detection device, a guidance route storing unit, an input interface unit and a display control unit including a route display unit generating a map image and different route images according to an embodiment of the invention;
- Fig. 3: shows two-dimensional map images with a highlighted route image offset from the calculated route;
- Fig. 4: shows a two-dimensional map image with an offset highlighted route image and a second route image of the calculated route which appears as having a drop shadow according to an embodiment of the invention;
- Fig. 5: shows a three-dimensional map image with an offset highlighted route image and a second route image of the calculated route which appears as having a drop shadow according to another embodiment of the invention;
- Fig. 6: shows a two-dimensional map image with a highlighted route image according to the prior art, as mentioned in the introductory part of the description.

### DESCRIPTION OF EMBODIMENTS

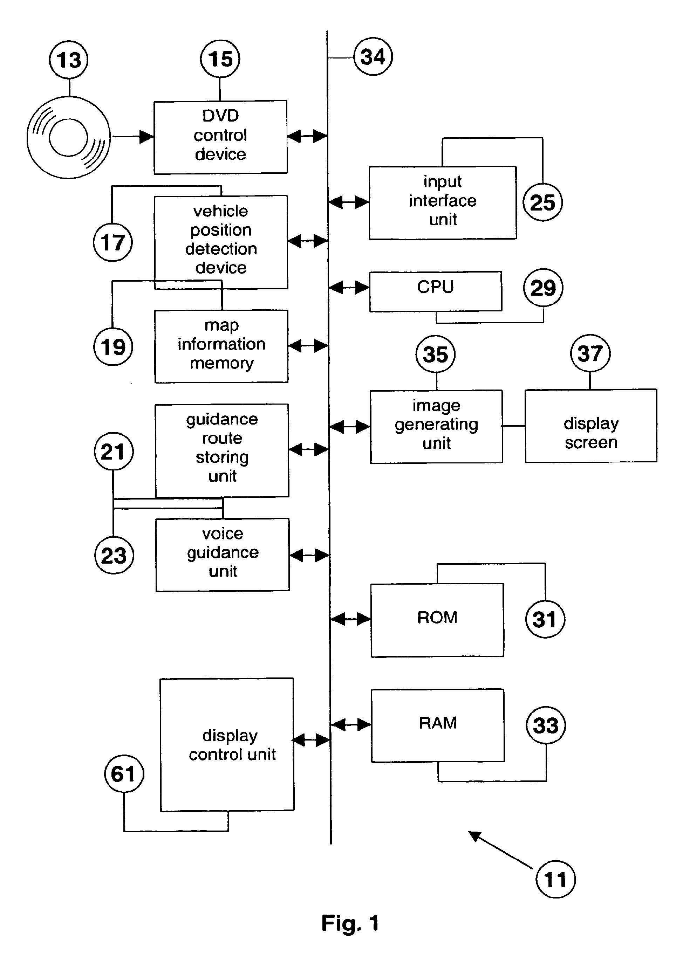

Fig. 1 is a schematic diagram illustrating an implementation of an embodiment of a navigation system 11, which is e.g. implemented in a vehicle. The navigation system 11 includes a recording medium 13 such as a DVD ROM or any other memory type suitable for storing map data. The recording medium 13 serves as a map storage medium for storing a digital map. A DVD control device 15 is for reading the predetermined map from the recording medium 13, and a vehicle position detection device 17 is for detecting a vehicle position. The vehicle position detection device 17 may have a range sensor for generating a pulse every time the vehicle passes through a predetermined distance, an angle sensor for measuring the driving direction of the vehicle, and a receiving unit such as a global positioning system (GPS) receiving unit. Further, the navigation system 11 includes a map information memory 19 for storing digital map information read from the recording medium 13, a guidance route storing unit 21 for storing information related to the searched guidance or navigation route to the destination predetermined by the user. Optionally, a voice guidance unit 23 for voice guidance at a manoeuvre point along the calculated route is included in the navigation system 11. An input interface unit 25, such as any suitable input device or interface, may be used for entering inputs such as menu selection, map scrolling, search for a route to the destination or the like.

The navigation system 11 further includes a processor (CPU) 29 for controlling the overall operation of the navigation system in interaction with the stored programs, a ROM 31 for storing a guidance route search program or the like, a RAM 33 for storing processed results, an image generating unit 35 for generating a map image based on the map information and guidance route data, and a display screen 37. The digital map information stored in the map information memory 19 includes, for example, street type data, data concerning the type of points of interest (POI type data), street name data, allowed vehicle speed, or other data such as graphical user interface elements (GUI elements) used for street labelling or the like. The navigation system 11 further comprises a display control unit 61 for generating image control signals for displaying the map image on the display screen 37 in interaction with the image generating unit 35. All of the above mentioned components implemented in the navigation system 11 are connected via a data bus 34 under the control of the CPU 29.

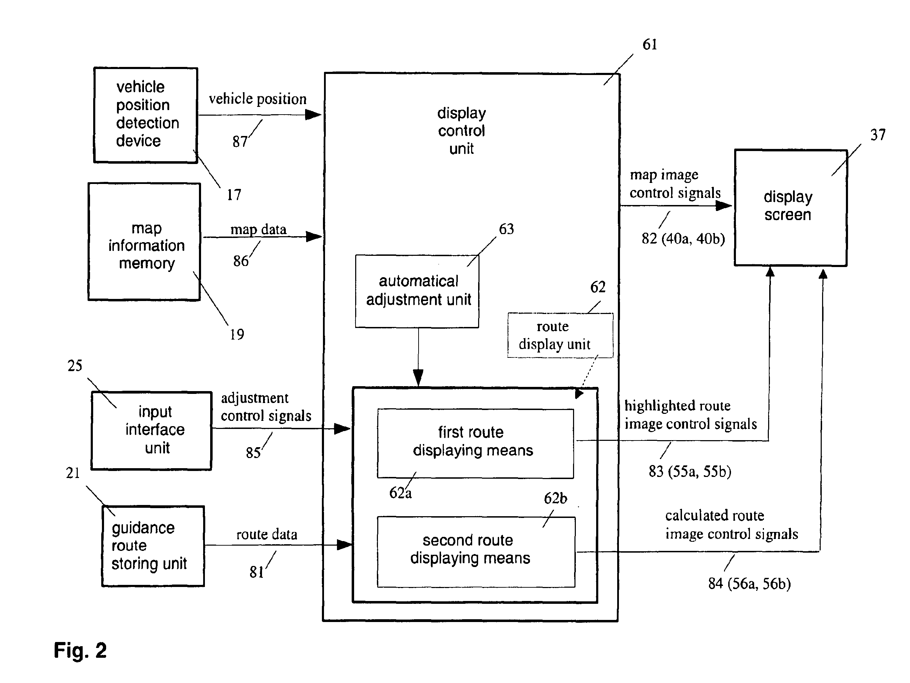

In Fig. 2 a schematic diagram is shown which illustrates, according to an embodiment of the invention, the map information memory 19, the vehicle position detection device 17, the guidance route storing unit 21, the input interface unit 25 and the display control unit 61 interacting for generating a map image in accordance with the invention. The display control unit 61 includes a route display unit 62 for generating different route images by means of a first route displaying means 62a and a second route displaying means 62b, as explained in more detail herein below.

The display control unit 61 receives route data 81 from the guidance route storing unit 21, which route data 81 define or indicate a calculated guidance or navigation route. Moreover, the display control unit 61 receives the vehicle position 87 from the vehicle position detection device 17. Map data 86 like streets of different types, such as highway, motorway or country roads are received by the display control unit 61 from map information memory 19. The map data 86 may also include other types of data such as points of interest (POI), landmark data and/or other GUI (Graphical User Interface) elements. The route display unit 62 is adapted to process the route data 81 which are indicative of the calculated route stored in guidance route storing unit 21. The first route displaying means 62a generates highlighted route image control signals 83 for generating a first highlighted route image within the map image which is indicative of the calculated route, which first highlighted route image is described with reference to the following Figures. The second route displaying means 62b generates calculated route image control signals 84 for generating a second route image within the map image corresponding to the calculated route as described herein with reference to the following Figures. The display control unit 61 is further adapted to generate map image control signals 82 for generating the map image which is combined with the first highlighted route image and with the second route image.

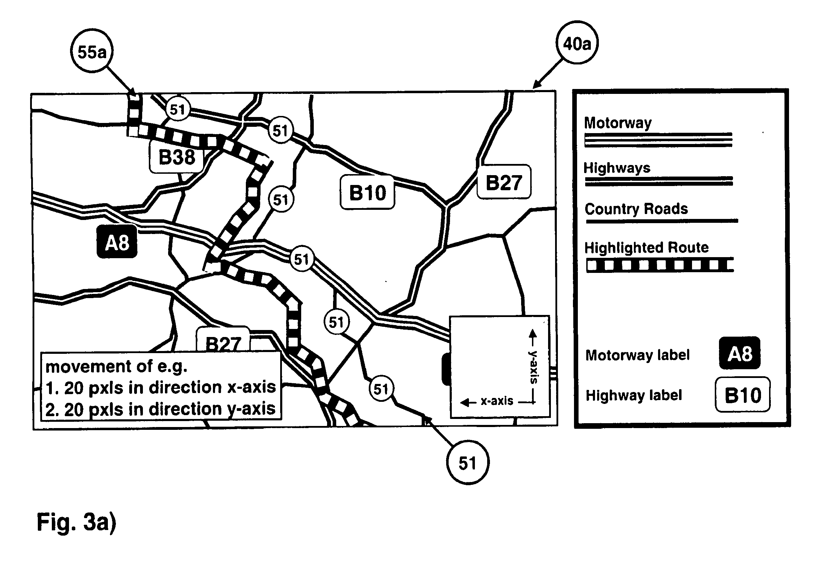

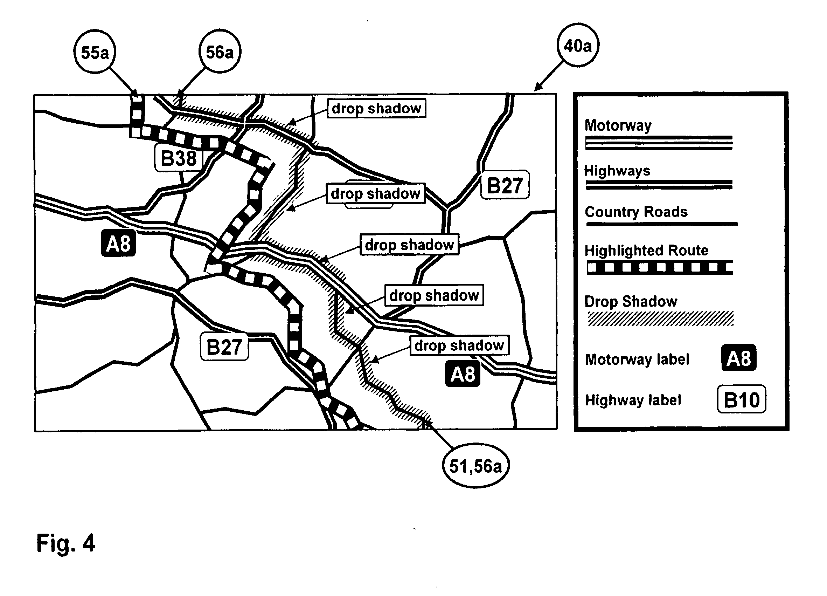

Figure 3a) shows a two-dimensional map image 40a with a highlighted route image which is offset from the original calculated route. In Fig. 3a), the calculated route is designated with reference number 51, whereas the offset highlighted route image is designated with reference number 55a. According to Fig. 3a) (and also according to Fig. 4 and Fig. 6) the display control unit 61 according to Fig. 2 is adapted for displaying a two-dimensional map image 40a on the display screen 37. Analogously, the route display unit 62 is adapted to generate two-dimensional route images such as the highlighted route image 55a. As shown in Fig. 3a), the highlighted route image 55a is offset from the calculated route 51 on the map image 40a, which offset is controlled by the first route displaying means 62a according to Fig. 2. As a result, the streets belonging to the calculated route 51 can be recognized by the user as regards their street type as the highlighted route image 55a is moved away from the original calculated route 51. Particularly, the first route displaying means 62a is adapted to offset the highlighted route image 55a in a first direction along the x-axis of the display screen. For example, the distance of the offset in x-direction is 20 pixels along the x-axis of the display screen. Likewise, the first route displaying means 62a is further adapted to offset the highlighted route image 55a in a second direction along the y-axis of the display screen perpendicular to the x-direction as mentioned before. For example, the offset distance is 20 pixels along the y-axis of the display screen. Such offset movement results in a lifting effect of the highlighted route image 55a in a z-direction perpendicular to the x-axis and y-axis. However, according to another embodiment, any other offset direction and/or distance may be appropriate for the purposes of the present invention.

According to an embodiment of the invention the user may adjust the offset as generated by the first route displaying means 62a by free selection. For this purpose, returning to Figures 1 and 2, the user may input any free selectable offset in the input interface unit 25 for generating adjustment control signals 85 for adjusting the offset of the first route displaying means 62a. These adjustment control signals 85 are supplied to the route display unit 62. In this concern, the input interface unit 25 acts as an adjustment unit for adjusting the offset.

According to another embodiment of the invention, the display control unit 61 may include another adjustment unit, such as the automatic adjustment unit 63 which is connectible to the route display unit 62. The automatic adjustment unit 63 is adapted to adjust the offset of the first route displaying means 62a automatically when at least a part of the highlighted route image 55a superimposes a considerable corresponding part of the calculated route 51 on the map image.

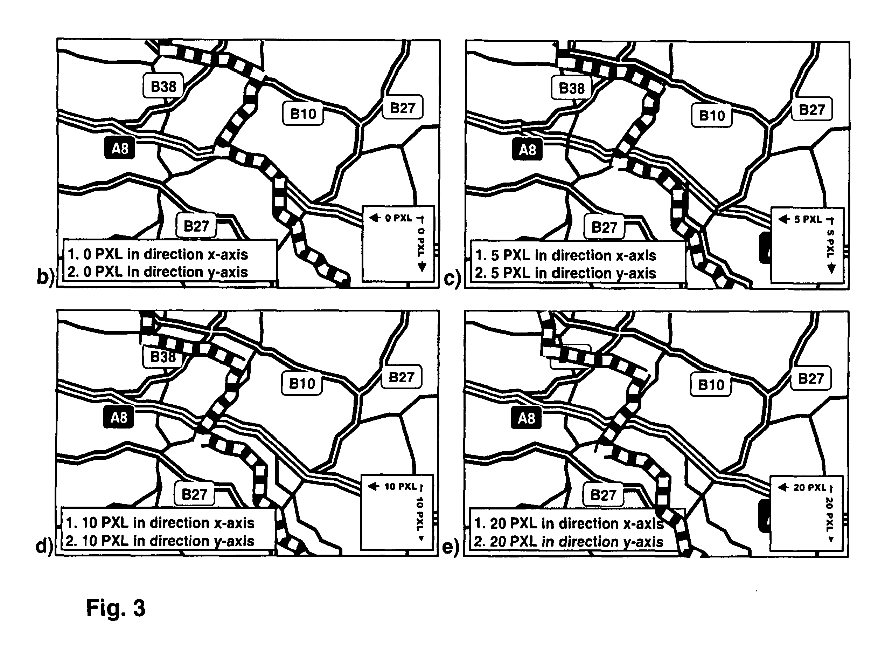

Figures 3b) to 3e) illustrate different embodiments of map images like the one of Fig. 3a) with different offset of the highlighted route image 55a between 0 pixels and 20 pixels, respectively. The respective offset values along the x-axis and the y-axis may also differ between the x-axis and the y-axis according to another embodiments, which are not shown in Fig. 3.

Fig. 4 shows a two-dimensional map image 40a with an offset highlighted route image 55a, in particular of the type as explained with reference to Fig. 3, and further shows a second route image 56a corresponding to the calculated route 51, which second route image 56a appears as having a drop shadow according to an embodiment of the invention. Generally, the appearance of the second route image 56a is different from the original appearance of the corresponding streets belonging to the calculated route 51. For example, the brightness of the second route image 56a is different from, e.g. darker than the original brightness of the corresponding streets belonging to the calculated route 51. This may result in the effect of a drop shadow of the lifted highlighted route image 55a which rests on the streets belonging to the calculated route. However, the original basic character and/or style of the corresponding streets belonging to the calculated route 51 are kept substantially unchanged so that the user may still recognize the respective street type of the streets belonging to the route, wherein the drop shadow effect makes the character of the streets only a little darker. Advantageously, the user can easily assign the streets on the map to the highlighted route image.

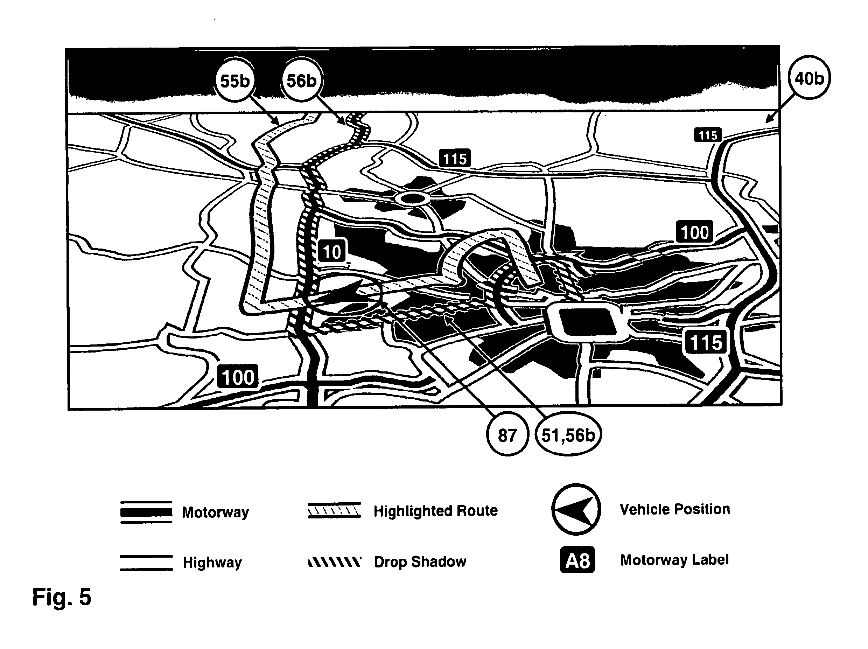

In Fig. 5, a three-dimensional map image 40b is shown as generated by the display control unit 61 of Fig. 2 according to another embodiment of the invention. The map image 40b provides a three-dimensional impression of the vicinity adjacent to the vehicle's position 87. Analogously to the embodiments as described with reference to Figures 3 and 4, three-dimensional route images are generated by the route display unit 62, wherein reference number 55b designates the offset first highlighted route image and reference number 56b designates the second route image corresponding to the original calculated route 51. As shown in Fig. 5, the second route image 56b is made darker in brightness than the original brightness of the corresponding streets belonging to the calculated route 51, resulting in a drop shadow effect caused by the lifted highlighted route image 55b which rests on the streets belonging to the calculated route 51. Thus, the driver of a vehicle can easily assign the streets on the map to the highlighted route image thereby keeping the original character of the street types belonging to the calculated route 51 as regards colour, width, style, etc., as shown.

## Claims

1. Electronic route display system comprising:
a display screen (37) adapted to display a map image (40a, 40b),
a display control unit (61) for generating image control signals (82) for displaying the map image (40a, 40b) on the display screen (37),
a route display unit (62) adapted to process route data (81) which are indicative of a calculated route (51) and to generate route images (55a, 56a; 55b, 56b),
the route display unit (62) including route displaying means (62b) for generating a route image (56a, 56b) within the map image corresponding to the calculated route (51), the route displaying means (62b) being adapted to generate at least a portion of the route image (56a, 56b) with an appearance which is different from an original appearance of corresponding map data belonging to the calculated route (51) on the map image,
**characterised by**
the route display unit (62) including additional route displaying means (62a) for generating a highlighted route image (55a, 55b) within the map image indicative of the calculated route (51), the additional route displaying means (62a) being adapted to offset at least a portion of the highlighted route image (55a, 55b) from the calculated route (51) on the map image.

2. The electronic route display system according to claim 1, wherein the route displaying means (62b) is adapted to generate the at least one portion of the route image (56a, 56b) in a brightness which is different from, in particular darker than, the original brightness of corresponding map data belonging to the calculated route (51) on the map image.

3. The electronic route display system according to claim 1 or 2, wherein the route displaying means (62b) is adapted to generate the at least one portion of the route image (56a, 56b) in a colour and/or saturation which is different from the original colour and/or saturation, respectively, of corresponding map data belonging to the calculated route (51) on the map image.

4. The electronic route display system according to any of claims 1 to 3, wherein the route displaying means (62b) is adapted to generate the at least one portion of the route image (56a, 56b) thereby keeping the original basic character and/or style of the corresponding map data on the calculated route (51).

5. The electronic route display system according to any of claims 1 to 4, wherein the additional route displaying means (62a) is adapted to offset the at least one portion of the highlighted route image (55a, 55b), thereby appearing as a lifting movement of the highlighted route image (55a, 55b) with respect to the calculated route (51).

6. The electronic route display system according to any of claims 1 to 5, wherein the display control unit (61) is adapted for displaying a two-dimensional map image (40a) on the display screen (37), and the route display unit (62) is adapted to generate two-dimensional route images (55a, 56a).

7. The electronic route display system according to any of claims 1 to 6, wherein the display control unit (61) is adapted for displaying a three-dimensional map image (40b) on the display screen (37), and the route display unit (62) is adapted to generate three-dimensional route images (55b, 56b).

8. The electronic route display system according to any of claims 1 to 7, wherein the additional route displaying means (62a) is adapted to offset the at least one portion of the highlighted route image (55a, 55b) in a first direction (x) of the display screen (37).

9. The electronic route display system according to claim 8, wherein the additional route displaying means (62a) is further adapted to offset the at least one portion of the highlighted route image (55a, 55b) in a second direction (y) of the display screen (37) perpendicular to the first direction (x).

10. The electronic route display system according to any of claims 1 to 9, including a first adjustment unit (25) connectable to the route display unit (62), the first adjustment unit (25) operable by the user for adjusting the offset of the additional route displaying means (62a).

11. The electronic route display system according to any of claims 1 to 10, including a second adjustment unit (63) connectable to the route display unit (62), the second adjustment unit (63) adapted to adjust the offset of the additional route displaying means (62a) automatically when at least a part of the highlighted route image (55a, 55b) superimposes a corresponding part of the calculated route (51) on the map image.

12. A navigation system comprising an electronic route display system (11) according to any one of claims 1 to 11.

13. The navigation system of claim 12, wherein the navigation system is implemented within a vehicle adapted to move the user therein.

14. A computer system comprising an electronic route display system (11) according to any one of claims 1 to 11.

15. A method for displaying a route within a map image, the method comprising the steps of:
processing route data (81) which are indicative of a calculated route (51),
generating a route image (56a, 56b) within the map image corresponding to the calculated route (51), wherein at least a portion of the route image (56a, 56b) has an appearance which is different from an original appearance of corresponding map data belonging to the calculated route (51) on the map image,
**characterised by** further comprising the steps of:
generating a highlighted route image (55a, 55b) within a map image (40a, 40b) on a display screen (37) indicative of the calculated route (51),
offsetting at least a portion of the highlighted route image (55a, 55b) from the calculated route (51) on the map image.

## Patentansprüche

1. Elektronisches Routenanzeigesystem, aufweisend:
einen Anzeigeschirm (37), der zum Anzeigen eines Kartenbildes (40a, 40b) ausgebildet ist,
eine Anzeigesteuereinheit (61) zum Erzeugen von Bildsteuersignalen (82) zum Anzeigen des Kartenbildes (40a, 40b) auf dem Anzeigeschirm (37),
eine Routenanzeigeeinheit (62), die zum Verarbeiten von Routendaten (81), die eine berechnete Route (51) angeben, sowie zum Erzeugen von Routenbildern (55a, 56a; 55b, 56b) ausgebildet ist,
wobei die Routenanzeigeeinheit (62) eine Routenanzeigeeinrichtung (62b) zum Erzeugen eines der berechneten Route (51) entsprechenden Routenbildes (56a, 56b) innerhalb des Kartenbildes aufweist, wobei die Routenanzeigeeinrichtung (62b) dazu ausgebildet ist, zumindest einen Bereich des Routenbildes (56a, 56b) in einer Erscheinungsweise zu erzeugen, die von einer ursprünglichen Erscheinungsweise von entsprechenden, zu der berechneten Route (51) zugehörigen Kartendaten auf dem Kartenbild verschieden ist,
**dadurch gekennzeichnet, dass** die Routenanzeigeeinheit (62) eine zusätzliche Routenanzeigeeinrichtung (62a) zum Erzeugen eines die berechnete Route (51) anzeigenden, hervorgehobenen Routenbildes (55a, 55b) innerhalb des Kartenbildes aufweist, wobei die zusätzliche Routenanzeigeeinrichtung (62a) dazu ausgebildet ist, zumindest einen Bereich des hervorgehobenen Routenbildes (55a, 55b) von der berechneten Route (51) auf dem Kartenbild zu versetzen.

2. Elektronisches Routenanzeigesystem nach Anspruch 1,
wobei die Routenanzeigeeinrichtung (62b) dazu ausgebildet ist, den mindestens einen Bereich des Routenbildes (56a, 56b) in einer Helligkeit zu erzeugen, die von der ursprünglichen Helligkeit von entsprechenden, zu der berechneten Route (51) zugehörigen Kartendaten auf dem Kartenbild verschieden ist, insbesondere dunkler als diese ist.

3. Elektronisches Routenanzeigesystem nach Anspruch 1 oder 2,
wobei die Routenanzeigeeinrichtung (62b) dazu ausgebildet ist, den mindestens einen Bereich des Routenbildes (56a, 56b) in einer Farbe und/oder einer Sättigung zu erzeugen, die von der ursprünglichen Farbe und/oder Sättigung von entsprechenden, zu der berechneten Route (51) zugehörigen Kartendaten auf dem Kartenbild verschieden sind.

4. Elektronisches Routenanzeigesystem nach einem der Ansprüche 1 bis 3,
wobei die Routenanzeigeeinrichtung (62b) dazu ausgebildet ist, den mindestens einen Bereich des Routenbildes (56a, 56b) zu erzeugen, um dadurch den ursprünglichen Grundcharakter und/oder Grundstil der entsprechenden Kartendaten auf der berechneten Route (51) beizubehalten.

5. Elektronisches Routenanzeigesystem nach einem der Ansprüche 1 bis 4,
wobei die zusätzliche Routenanzeigeeinrichtung (62a) dazu ausgebildet ist, den mindestens einen Bereich des hervorgehobenen Routenbildes (55a, 55b) zu versetzen, so dass dieser als Anhebebewegung des hervorgehobenen Routenbildes (55a, 55b) in Bezug auf die berechnete Route (51) in Erscheinung tritt.

6. Elektronisches Routenanzeigesystem nach einem der Ansprüche 1 bis 5,
wobei die Anzeigesteuereinheit (61) dazu ausgebildet ist, ein zweidimensionales Kartenbild (40a) auf dem Anzeigeschirm (37) anzuzeigen, und die Routenanzeigeeinheit (62) dazu ausgebildet ist, zweidimensionale Routenbilder (55a, 56a) zu erzeugen.

7. Elektronisches Routenanzeigesystem nach einem der Ansprüche 1 bis 6,
wobei die Anzeigesteuereinheit (61) dazu ausgebildet ist, ein dreidimensionales Kartenbild (40b) auf dem Anzeigeschirm (37) anzuzeigen, und die Routenanzeigeeinheit (62) dazu ausgebildet ist, dreidimensionale Routenbilder (55b, 56b) zu erzeugen.

8. Elektronisches Routenanzeigesystem nach einem der Ansprüche 1 bis 7,
wobei die zusätzliche Routenanzeigeeinrichtung (62a) dazu ausgebildet ist, den mindestens einen Bereich des hervorgehobenen Routenbildes (55a, 55b) in einer ersten Richtung (x) des Anzeigeschirmes (37) zu versetzen.

9. Elektronisches Routenanzeigesystem nach Anspruch 8,
wobei die zusätzliche Routenanzeigeeinrichtung (62a) ferner dazu ausgebildet ist, den mindestens einen Bereich des hervorgehobenen Routenbildes (55a, 55b) in einer zu der ersten Richtung (x) rechtwinkligen, zweiten Richtung (y) des Anzeigeschirmes (37) zu versetzen.

10. Elektronisches Routenanzeigesystem nach einem der Ansprüche 1 bis 9, mit einer ersten Einstelleinheit (25), die mit der Routenanzeigeeinheit (62) verbindbar ist, wobei die erste Einstelleinheit (25) durch den Benutzer betätigbar ist, um die Versetzung der zusätzlichen Routenanzeigeeinrichtung (62a) einzustellen.

11. Elektronisches Routenanzeigesystem nach einem der Ansprüche 1 bis 10, mit einer zweiten Einstelleinheit (63), die mit der Routenanzeigeeinheit (62) verbindbar ist, wobei die zweite Einstelleinheit (63) dazu ausgebildet ist, die Versetzung der zusätzlichen Routenanzeigeeinrichtung (62a) automatisch einzustellen, wenn zumindest ein Teil des hervorgehobenen Routenbildes (55a, 55b) einem entsprechenden Teil der berechneten Route (51) auf dem Kartenbild überlagert ist.

12. Navigationssystem mit einem elektronisches Routenanzeigesystem (11) nach einem der Ansprüche 1 bis 11.

13. Navigationssystem nach Anspruch 12,
wobei das Navigationssystem in einem Fahrzeug vorgesehen ist, das zum Bewegen eines Benutzers in diesem ausgebildet ist.

14. Computersystem mit einem elektronischen Routenanzeigesystem (11) nach einem der Ansprüche 1 bis 11.

15. Verfahren zum Anzeigen einer Route auf einem Kartenbild, wobei das Verfahren folgende Schritte aufweist:
Verarbeiten von Routendaten (81), die eine berechnete Route (51) angeben,
Erzeugen eines der berechneten Route (51) entsprechenden Routenbildes (56a, 56b) in dem Kartenbild, wobei zumindest ein Bereich des Routenbildes (56a, 56b) eine Erscheinungsweise aufweist, die von einer ursprünglichen Erscheinungsweise von entsprechenden, zu der berechneten Route (51) zugehörigen Kartendaten auf dem Kartenbild verschieden ist,
**dadurch gekennzeichnet, dass** es ferner folgende Schritte aufweist:
Erzeugen eines die berechnete Route (51) anzeigenden, hervorgehobenen Routenbildes (55a, 55b) innerhalb eines Kartenbildes (40a, 40b) auf einem Anzeigeschirm (37),
Versetzen zumindest eines Bereichs des hervorgehobenen Routenbildes (55a, 55b) von der berechneten Route (51) auf dem Kartenbild.

## Revendications

1. Système d'affichage électronique d'itinéraires comprenant :
un écran d'affichage (37) adapté pour afficher une image de carte (40a, 40b),
une unité de commande d'affichage (61) pour générer des signaux de commande d'image (82) pour afficher l'image de carte (40a, 40b) sur l'écran d'affichage (37),
une unité d'affichage d'itinéraire (62) adaptée pour traiter des données d'itinéraire (81) qui indiquent un itinéraire calculé (51) et pour générer des images d'itinéraire (55a, 56a ; 55b, 56b),
l'unité d'affichage d'itinéraire (62) incluant un moyen d'affichage d'itinéraire (62b) pour générer une image d'itinéraire (56a, 56b) dans l'image de carte correspondant à l'itinéraire calculé (51), le moyen d'affichage d'itinéraire (62b) étant adapté pour générer au moins une partie de l'image d'itinéraire (56a, 56b) avec une apparence qui est différente d'une apparence d'origine de données de carte correspondantes appartenant à l'itinéraire calculé (51) sur l'image de carte,
**caractérisé en ce que** l'unité d'affichage d'itinéraire (62) comprend un moyen d'affichage d'itinéraire supplémentaire (62a) pour générer une image d'itinéraire mise en relief (55a, 55b) dans l'image de carte indiquant l'itinéraire calculé (51), le moyen d'affichage d'itinéraire supplémentaire (62a) étant adapté pour décaler au moins une partie de l'image d'itinéraire mise en relief (55a, 55b) par rapport à l'itinéraire calculé (51) sur l'image de carte.

2. Système d'affichage électronique d'itinéraires selon la revendication 1, dans lequel le moyen d'affichage d'itinéraire (62b) est adapté pour générer ladite au moins une partie de l'image d'itinéraire (56a, 56b) avec une luminosité qui est différente, en particulier plus sombre que la luminosité d'origine des données de carte correspondantes appartenant à l'itinéraire calculé (51) sur l'image de carte.

3. Système d'affichage électronique d'itinéraires selon la revendication 1 ou 2, dans lequel le moyen d'affichage d'itinéraire (62b) est adapté pour générer ladite au moins une partie de l'image d'itinéraire (56a, 56b) avec une couleur et/ou saturation qui est différente respectivement de la couleur et/ou saturation d'origine des données de carte correspondantes appartenant à l'itinéraire calculé (51) sur l'image de carte.

4. Système d'affichage électronique d'itinéraires selon l'une quelconque des revendications 1 à 3, dans lequel le moyen d'affichage d'itinéraire (62b) est adapté pour générer ladite au moins une partie de l'image d'itinéraire (56a, 56b) en maintenant le caractère et/ou style de base d'origine des données de carte correspondantes sur l'itinéraire calculé (51).

5. Système d'affichage électronique d'itinéraires selon l'une quelconque des revendications 1 à 4, dans lequel le moyen d'affichage d'itinéraire supplémentaire (62a) est adapté pour décaler ladite au moins une partie de l'image d'itinéraire mise en relief (55a, 55b), apparaissant ainsi sous la forme d'un mouvement de surélévation de l'image d'itinéraire mise en relief (55a, 55b) par rapport à l'itinéraire calculé (51).

6. Système d'affichage électronique d'itinéraires selon l'une quelconque des revendications 1 à 5, dans lequel l'unité de commande d'affichage (61) est adaptée pour afficher une image de carte bidimensionnelle (40a) sur l'écran d'affichage (37), et l'unité d'affichage d'itinéraire (62) est adaptée pour générer des images d'itinéraire bidimensionnelles (55a, 56a).

7. Système d'affichage électronique d'itinéraires selon l'une quelconque des revendications 1 à 6, dans lequel l'unité de commande d'affichage (61) est adaptée pour afficher une image de carte tridimensionnelle (40b) sur l'écran d'affichage (37), et l'unité d'affichage d'itinéraire (62) est adaptée pour générer des images d'itinéraire tridimensionnelles (55b, 56b).

8. Système d'affichage électronique d'itinéraires selon l'une quelconque des revendications 1 à 7, dans lequel le moyen d'affichage d'itinéraire supplémentaire (62a) est adapté pour décaler ladite au moins une partie de l'image d'itinéraire mise en relief (55a, 55b) dans une première direction (x) de l'écran d'affichage (37).

9. Système d'affichage électronique d'itinéraires selon la revendication 8, dans lequel le moyen d'affichage d'itinéraire supplémentaire (62a) est en outre adapté pour décaler ladite au moins une partie de l'image d'itinéraire mise en relief (55a, 55b) dans une deuxième direction (y) de l'écran d'affichage (37) perpendiculaire à la première direction (x).

10. Système d'affichage électronique d'itinéraires selon l'une quelconque des revendications 1 à 9, comprenant une première unité de réglage (25) pouvant être connectée à l'unité d'affichage d'itinéraire (62), la première unité de réglage (25) pouvant être employée par l'utilisateur pour régler le décalage du moyen d'affichage d'itinéraire supplémentaire (62a).

11. Système d'affichage électronique d'itinéraires selon l'une quelconque des revendications 1 à 10, comprenant une deuxième unité de réglage (63) pouvant être connectée à l'unité d'affichage d'itinéraire (62), la deuxième unité de réglage (63) étant adaptée pour régler le décalage du moyen d'affichage d'itinéraire supplémentaire (62a) automatiquement quand au moins une partie de l'image d'itinéraire mise en relief (55a, 55b) coïncide avec une partie correspondante de l'itinéraire calculé (51) sur l'image de carte.

12. Système de navigation comprenant un système d'affichage électronique d'itinéraires (11) selon l'une quelconque des revendications 1 à 11.

13. Système de navigation selon la revendication 12, dans lequel le système de navigation est monté dans un véhicule adapté pour déplacer l'utilisateur.

14. Système informatique comprenant un système d'affichage électronique d'itinéraires (11) selon l'une quelconque des revendications 1 à 11.

15. Procédé pour afficher un itinéraire dans une image de carte, le procédé comprenant les étapes consistant à :
traiter des données d'itinéraire (81) qui indiquent un itinéraire calculé (51),
générer une image d'itinéraire (56a, 56b) dans l'image de carte correspondant à l'itinéraire calculé (51), au moins une partie de l'image d'itinéraire (56a, 56b) ayant une apparence qui est différente d'une apparence d'origine de données de carte correspondantes appartenant à l'itinéraire calculé (51) sur l'image de carte,
**caractérisé en ce qu'**il comprend en outre les étapes consistant à :
générer une image d'itinéraire mise en relief (55a, 55b) dans une image de carte (40a, 40b) sur un écran d'affichage (37) indiquant l'itinéraire calculé (51),
décaler au moins une partie de l'image d'itinéraire mise en relief (55a, 55b) par rapport à l'itinéraire calculé (51) sur l'image de carte.
